# EUROPEAN PATENT SPECIFICATION

(11) **EP 0 568 505 B1**
(45) Date of publication and mention of the grant of the patent: **26.06.1996**
(21) Application number: 93830174.4
(22) Date of filing: 23.04.1993
(51) Int. Cl.: B23Q 1/25, B23Q 3/155

(54) **A mobile linear tool-carrier for changing tools on numeric-command panel-working machines**
Bewegbarer, linearer Werkzeugträger zum Wechseln von Werkzeugen in numerisch gesteuerten Maschinen für die Bearbeitung von Platten
Porte-outil mobile et linéaire pour changer des outils dans des machines à commande numériques pour l'usinage de panneaux

(30) Priority: 30.04.1992 IT BO920088 U
(43) Date of publication of application: 03.11.1993
(73) Proprietor: MASTERWOOD S.p.A., I-47037 Rimini (FO) (IT)
(72) Inventor: Muti, Giancarlo, I-47037 Rimini (FO) (IT)
(74) Representative: Lanzoni, Luciano

(56) References cited:
- WO-A-83/03786
- FR-A- 1 401 446
- FR-A- 2 555 086
- GB-A- 1 244 125
- US-A- 3 186 266
- VDI ZEITSCHRIFT vol. 123, no. 18, September 1981, DUSSELDORF DE pages 765 - 766
- PATENT ABSTRACTS OF JAPAN vol. 4, no. 99 (M-21)(581) 16 July 1980 &JP-A-55 58 931 (HITACHI SEIKO K.K.) 2 May 1980

## Description

The invention relates to a numerically-controlled panel-working machine with a linear tool-carrier for changing tools.

Often, during the working of panels, for example wooden panels, it is necessary to use several different tools in rapid succession.

This leads to the problem of substituting the tools in the fastest possible way, and, if possible, without interfering in the functioning of the entire machine. Leaving aside the possibility of manual substitution, reference will be made to numeric-command panel-working machines, in particular to boring-milling machines, which generally comprise a mobile part, hereinafter referred to as the head, bearing the work-tool, and a fixed bed. The bed is often divided into two panel-positioning zones, with a single operator moving up and down from one zone to the other to arrange a new workpiece in the place of the last, finished piece, while the head has already at this stage been moved to work on the other workpiece in the nearby zone.

Normally, the head is able to move according to the directions of three axes, x, y, z, mutually orthogonal, each of which is perpendicular to the plane identified by the other two. The three movements permit the head to pass from one work zone to the other, moving, for example, along axis x, and to position the tool correctly above the workpiece. The movements along the axis of the work plane, for example x and y, are obtained by means of two above-positioned saddles which run in orthogonal guides made in the bed and on the above-lying saddle, so that the two movements are independent of each other. The movement along the axis z is realised by movement means, also independent, causing the head to run vertically along guides made on the overlying saddle.

Owing to the high speed of the head in its movement along axis x, and to the danger consequent to this fact, the operators' safety is guaranteed by a photocell control system which prevents the movement of the head from one zone to the other on the bed when a person is present in the immediate vicinity.

Normally two solutions are adopted for the substitution of the tool carried by the mobile head: a first solution envisages the presence of a fixed linear tool-carrier at an end of the bed, while a second solution, disclosed in the document US-A-3 186 266, teaches the use of a circular tool-carrier, solidly mobile to the machine head and rotating about a horizontal axis.

The presence of fixed tool-carriers at an end of the bed brings about the necessity of performing the substitution when the machine head is at its x-axis end run position, according to the present example. Therefore, if it were necessary to change the tool while the machine were working in the most distant zone from the tool-carrier, and if in the other zone the operator were substituting the work-piece, it would be necessary to wait for the operator to leave the zone before moving the head to its end run position and substituting the tool.

In any case, even when the operator was not in the other zone, the tool change would incur empty runs which, taking into account the considerable size of the machine, causing significant time-wasting and greater wear on the machine.

Also the use of circular tool-carriers solid to the machine head leads to drawbacks: if the tool-carrier disc or tool-carrier chain are horizontal, the head can pick up and set down the tools simply by positioning itself above them, but a like structure would have an excessive dimension. For this reason it is preferable to arrange them vertically with a horizontal rotation axis: in any case, whether they are horizontally or vertically arranged, it is still necessary to have an automatic fourth axis check. If the disc is vertical, it is further necessary to have an articulated mechanical arm operating the substitution of the tool between the disc and the head of the machine, which surfaces are arranged at 90 degrees.

The aim of the present invention is thus that of eliminating the above-mentioned drawbacks. The invention, as it is characterised in the claims that follow, solves the problem of automatically managing a mobile tool-carrier without introducing further axes needful of checking.

One of the advantages obtained by means of the present invention consists essentially in the fact that "dead" time is substantially reduced during the tool-changing operations.

A further advantage derives from the fact that, as a consequence of the saved time, the machine suffers less wear and its dimension stays practically unaltered. Further, the realisation costs are reduced and the machine functions more reliably.

The invention will be better described hereinunder, with the help of the accompanying drawings representing a form of realisation is purely in the form of a non-limiting example, in which:
- figure 1 shows a schematic representation of the invention in a normal applicational context;
- figure 2 shows a particular of the application of which in figure one in a frontal view;

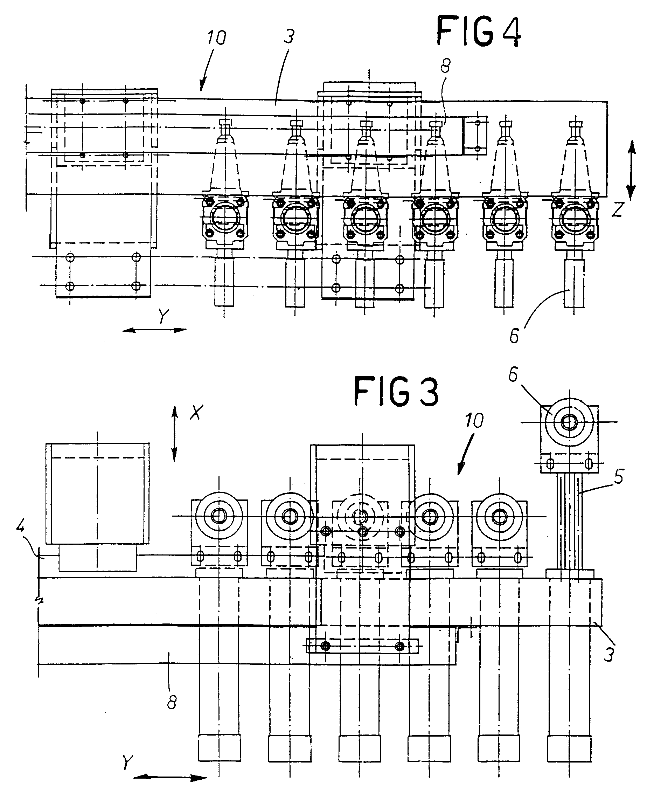

- figure 3 shows the invention in plan view;
- figure 4 shows the invention in a lateral view.

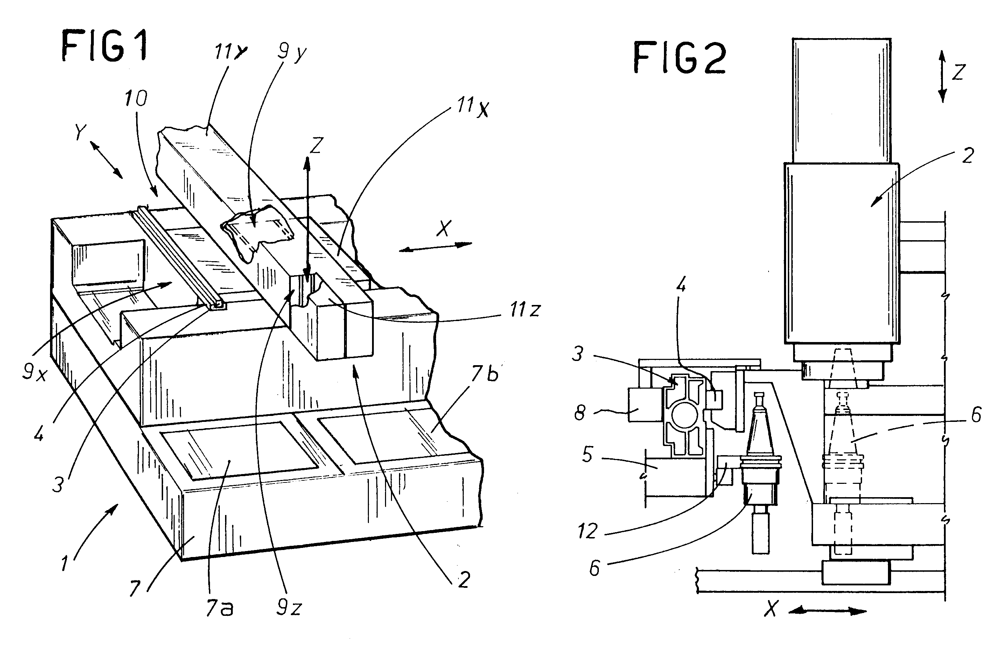

As can be seen in figure 1, the present invention concerns a numerically-controlled panel-working machine with a mobile linear tool-carrier for the changing of tools. The tool-carrier 10 in question is movably associable to a machine 1 for the working of panels, which machine 1 comprises a fixed bed 7 and a mobile workhead 2 equipped with first indirect movement means 9x and second and third direct movement means 9y, 9z with respect to three mutually orthogonal directions x, y, z. Also in figure 1, even if represented schematically and not in scale, it can be seen that the bed 7 is subdivided into two distinct work zones 7a, 7b, wherein the operator works. In the described case, as normally happens, the workhead 2 itself consists of an electrochuck associable time-by-time to the tool 6 desired. In the example, the said workhead 2 is solid to a first saddle 11z, vertically slidable into a guide made in the frontal wall of a second saddle 11y, translating along a direction y of the horizontal plane in a guide made on the upper wall of a third saddle 11x which translates in a perpendicular direction x to the other two directions into a guide in the bed 7. The tool-carrier 10 comprises at least one rigid rod 3, movably associable to the workhead 2 in correspondence with indirect movement means 9x and arranged according to a direction y, or z perpendicular to the movement direction of the said indirect movement means 9x. In the illustrated case, it further comprises a straight sliding guide 4 of the rigid rod 3 which permits the rod 3 to translate from a first rest position, with the workhead 2 functioning, to a second work position, with the workhead 2 still for the tool-change operation. The rigid rod 3 is further equipped with supports 5 of the tools 6 which supports 5 are slidable transversally to the rod 3 in the same movement direction as the means 9x to which the rod 3 is associated, in such a way as to permit the said workhead 2 of the machine 1, correctly positioned by the other movement means 9y, 9z, the collection and the deposit of the said tools 6.

Obviously, the tool-carrier 10 must be solid to the saddle 11x in direct contact with the bed 7, since only in this case the workhead 2 can move in two directions y and z independently of the tool-carrier 10 and position itself correctly for the toolchange.

The rigid rod 3, with the corresponding straight guide 4, is arranged along direction y in which the workhead 2 exhibits its larger dimension, in such a way as to reduce the total dimension in the rest position. Just as the rod 3 and the guide 4 could be arranged along the other direction z perpendicular to the movement direction x of the saddle 11x to which they are solid, so the arrangement of the saddles 11x, 11y, 11z could advantageously be different if the shape of the machine 1 were also different.

In order to obtain the minimum dimension possible and to render the tool-carrier 10 as reliable as possible, the rigid rod 3 into the straight sliding guide 4 is moved by a stemless pneumatic cylinder 8.

When the tool 6 is to be substituted, the workhead 2 rises to a rest position, the rigid rod 3 runs forward into the work position, while the workhead 2, moving parallel to the rod 3, aligns with the empty support 5 by means of automatic command, and then is lowered. The tool 6 is collected by pliers 12, the workhead 2 rises and aligns itself, yet moving parallel to the rod 3, with the new tool 6 to be used. The corresponding support 5 runs up until it brings the tool 6 below the workhead 2, which workhead 2 in lowering is coupled to the new tool 6, the empty support 5 returns to its original position and the rigid rod 3 returns to its rest position while the machine 1 restarts work.

## Claims

1. A panel-working machine numerically controlled , comprising a fixed bed (7), a mobile workhead (2) and a mobile linear tool-carrier (10) for changing tools (6) movably associable to said panel-working machine (1), said workhead (2) being equipped with first means (9x) of indirect movement and second and third means (9y, 9z) of direct movement with respect to three mutually orthogonal directions (x, y, z), said tool-carrier being characterised in that it comprises at least one rigid rod (3) which is movably associable with said workhead (2) at said indirect movement means (9x) and which is arranged according to a direction (y, z) perpendicular to the movement direction of said indirect movement means (9x), said rigid rod (3) being equipped with supports (5) of the tools (6) which supports (5) are slidable transversally to the rigid rod (3) in the same movement direction as the indirect movement means (9x) to which the rod (3) is associated, in such a way as to permit the removal and deposit of said tools (6) by the workhead (2) of the machine (1), said workhead (2) being correctly positioned by the other movement means (9y, 9z).

2. A panel-working machine according to claim 1, characterised in that it further comprises a straight sliding guide (4) of the rigid rod (3) which guide (4) is solid to the said indirect movement means (9x), in such a way as to permit the rod (3) to translate from a first rest position, wherein the workhead (2) is functioning, to a second work position, wherein the said workhead (2) is still for the purpose of a toolchange operation.

3. A panel-working machine according to claim 2, characterised in that the said rigid rod (3) with the corresponding straight guide (4) is arranged along direction (y) wherein the said workhead (2) exhibits a greater dimension, in such a way as to reduce total dimension of the said workhead (2) in the said rest position.

4. A panel-working machine according to claim 2, characterised in that the said rigid rod (3) into the straight sliding guide (4) is moved by a stemless pneumatic cylinder (8).

## Patentansprüche

1. Numerisch gesteuerte Tafel-Bearbeitungsmaschine, bestehend aus einem ortsfesten Maschinenbett (7), einem bewegbaren Arbeitskopf (2) und einem beweglichen, linearen Werkzeugträger (10) zum Wechseln von bewegbar in der besagten Tafel-Bearbeitungsmaschine (1) anbringbaren Werkzeugen (6), wobei der besagte Arbeitskopf (2) bezüglich drei zueinander rechtwinkligen Richtungen (x, y, z) mit ersten Mitteln (9x) zur indirekten Bewegung und mit zweiten und dritten Mitteln (9y, 9z) zur direkten Bewegung ausgerüstet ist, und der besagte Werkzeugträger dadurch gekennzeichnet ist, daß er wenigstens eine steife Stange (3) aufweist, die bewegbar an den besagten indirekten Bewegungsmitteln (9x) des Arbeitskopfes (2) anbringbar und entsprechend einer Richtung (y, z) rechtwinklig zur Bewegungsrichtung der besagten indirekten Bewegungsmittel (9x) angeordnet ist, wobei die besagte steife Stange (3) mit Trägern (5) für die Werkzeuge (6) ausgestattet ist, und die Träger (5) quer zur starren Stange (3) und in derselben Bewegungsrichtung wie die indirekten Bewegungsmittel (9x), mit welchen die Stange (3) verbunden ist, derart verschiebbar sind, daß ein Auswechseln und Speichern der besagten Werkzeuge (6) durch den Arbeitskopf (2) der Maschine (1) möglich ist, wobei der besagte Arbeitskopf (2) durch die anderen Bewegungsmittel (9y, 9z) korrekt positioniert wird.

2. Tafel-Bearbeitungsmaschine nach Anspruch 1, dadurch gekennzeichnet, daß sie weiterhin eine gerade Gleitführung (4) für die steife Stange (3) aufweist, wobei die Führung (4) fest mit den besagten indirekten Bewegungsmitteln (9x) derart verbunden ist, daß die Stange (3) von einer ersten Ruhelage, bei der der Arbeitskopf (2) arbeitet, in eine zweite Arbeitsposition, bei der der besagte Arbeitskopf (2) zur Durchführung eines Werkzeugwechsels stillsteht, verschiebbar ist.

3. Tafel-Bearbeitungsmaschine nach Anspruch 2, dadurch gekennzeichnet, daß die besagte steife Stange (3) mit der entsprechenden geraden Führung (4) längs der Richtung (y), in welcher der besagte Arbeitskopf (2) in einem größeren Ausmaß vorsteht, derart angeordnet ist, daß die Gesamtausdehnung des besagten Arbeitskopfes (2) in der besagten Ruhelage reduziert wird.

4. Tafel-Bearbeitungsmaschine nach Anspruch 2, dadurch gekennzeichnet, daß die besagte steife Stange (3) in der geraden Gleitführung (4) durch einen schaftlosen Pneumatikzylinder (8) bewegt wird.

## Revendications

1. Une machine d'usinage pour panneaux à commande numérique, comprenant une table fixe (7), une tête d'usinage mobile (2) et un porte-outils mobile linéaire (10) pour le changement des outils (6) pouvant être associé de façon mobile à ladite machine d'usinage de panneaux (1), ladite tête d'usinage (2) étant dotée d'un premier moyen (9x) de mouvement indirect, et d'un deuxième et d'un troisième moyen (9y, 9z) de mouvement direct par rapport à trois directions orthogonales l'une à l'autre (x, y, z), ledit porte-outils étant caractérisé en ce qu'il comprend au moins une tige rigide (3) pouvant être associée de façon mobile avec ladite tête d'usinage (2) audit moyen de mouvement indirect (9x) et disposée suivant une direction (y, z) perpendiculaire à la direction du mouvement dudit moyen de mouvement indirect (9x), ladite tige rigide (3) étant dotée de supports (5) pour les outils (6), lesquels supports (5) peuvent coulisser transversalement par rapport à la tige rigide (3) dans la même direction de mouvement que le moyen de mouvement indirect (9x) auquel la tige (3) est associée, de façon à permettre l'enlèvement et le dépôt desdits outils (6) par la tête d'usinage (2) de la machine (1), ladite tête d'usinage (2) étant correctement positionnée par les autres moyens de mouvement (9y, 9z).

2. Une machine d'usinage de panneaux selon la revendication 1, caractérisée en ce qu'elle comprend en autre une glissière de coulissement (4) de la tige rigide (3), laquelle glissière (4) est solidaire dudit moyen de mouvement indirect (9x), de façon à permettre à la tige (3) d'accomplir un mouvement de translation d'une première position de repos, dans laquelle la tête d'usinage (2) fonctionne, à une deuxième position de travail, dans laquelle ladite tête d'usinage (2) est à arrêtée pour l'opération de changement d'outil.

3. Une machine d'usinage de panneaux selon la revendication 2, caractérisée en ce que ladite tige rigide (3), avec la glissière de coulissement correspondante (4), est disposée dans une direction (y), dans laquelle ladite tête d'usinage (2) présente une plus grande dimension, de façon à réduire la dimension totale de ladite tête d'usinage (2) dans ladite position de repos.

4. Une machine d'usinage de panneaux selon la revendication 2, caractérisée en ce ladite tige rigide (3) à l'intérieur de la glissière de coulissement droite (4) est mue par un vérin pneumatique sans tige (8).
